# EUROPEAN PATENT SPECIFICATION

(11) **EP 3 784 428 B1**
(45) Date of publication and mention of the grant of the patent: **06.04.2022**
(21) Application number: 19718634.9
(22) Date of filing: 11.04.2019
(51) Int. Cl.: B23B 41/00

(54) **DRILLING DEVICE**
BOHRAPPARATUS
DISPOSITIF DE PERÇAGE

(30) Priority: 24.04.2018 CN 201810369697
(43) Date of publication of application: 03.03.2021
(73) Proprietor: Hilti Aktiengesellschaft, 9494 Schaan (LI)
(72) Inventor: GOLDT, Mathias, shanghai, 201108 (CN); KOH, Gaisheng, Shanghai, 201108 (CN)
(74) Representative: Hilti Aktiengesellschaft Corporate Intellectual Property
(86) International application number: PCT/EP2019/059296
(87) International publication number: WO 2019/206667

(56) References cited:
- WO-A1-94/17944
- CN-Y- 200 995 452

## Description

### FIELD OF THE INVENTION

The present invention relates to a drilling device and, more particularly, to an adjustable drilling device for forming undercut-holes in different sizes.

### BACKGROUND OF THE INVENTION

Holes with undercuts are usually formed in facing panels or similar structures for receiving and being fastened with expansible plugs, such as undercut anchors with expansible parts.

CN2928451Y discloses an adjustable stone-drilling machine, of which an eccentricity of a drilling device is adjusted by moving adjusting nuts up and down.

CN200995452Y discloses a drilling machine for forming a hole in a target material according to the preamble of claim 1. The drilling machine includes a tilting eccentric positioner and a translation eccentric positioner for adjusting an eccentricity of a drilling device thereby adjusting a diameter of the hole.

It would be advantageous to have an alternative adjustable drilling device for forming the hole with the undercut.

### SUMMARY OF THE INVENTION

The present invention provides a drilling device including a supporting stand for holding a first drive device that rotates a first shaft about a first axis, a holder for holding a second drive device that rotates a second shaft about a second axis, and an offset mechanism coupled between the supporting stand and holder. The offset mechanism includes a controller movable between first and second positions to switch an outward displacement distance of the second axis with respect to the first axis between first and second distances, a first adjusting element moveable with respect to the supporting stand, wherein the first adjusting element defines the first position and stops the controller from moving beyond the first position in a first direction away from the second position, and a second adjusting element moveable with respect to the supporting stand, wherein the second adjusting element defines the second position and stops the controller from moving beyond the second position in a second direction away from the first position, wherein the second adjusting element includes a longitudinal through hole that allows the first adjusting element to pass therethrough.

### BRIEF DESCRIPTION OF THE DRAWINGS

The invention, together with objects and advantages thereof, may best be understood by reference to the following description of preferred embodiments together with the accompanying drawings in which:
FIG. 1 is a schematic front view of a drilling device for forming a hole with an undercut when the drilling device is in a first operating mode in accordance with an embodiment of present invention;
FIG. 2 is a schematic side view of the drilling device of FIG. 1 in accordance with an embodiment of present invention;
FIG. 3 is a schematic cross-sectional view of the drilling device from line A-A of FIG. 2 in accordance with an embodiment of present invention;
FIG. 4 is a schematic front view of the drilling device of FIG. 1 when the drilling device is in a second operating mode in accordance with an embodiment of present invention;
FIG. 5 is a schematic side view of the drilling device of FIG. 4 in accordance with an embodiment of present invention;
FIG. 6 is a schematic cross-sectional view of the drilling device from line B-B of FIG. 5 in accordance with an embodiment of present invention;
FIG. 7 is an enlarged schematic cross-sectional view of the controller and the first and second adjusting elements in FIG. 1 in accordance with an embodiment of present invention; and
FIG. 8 is a top plan view of the controller and a cross-sectional the second adjusting element from line C-C of FIG. 7 in accordance with an embodiment of present invention.

### DETALED DESCRIPTION OF PREFERRED EMBODIMENTS

The detailed description set forth below in connection with the appended drawings is intended as a description of presently preferred embodiments of the invention, and is not intended to represent the only forms in which the present invention may be practised. It is to be understood that the same or equivalent functions may be accomplished by different embodiments that are intended to be encompassed within the scope of the invention. In the drawings, like numerals are used to indicate like elements throughout. Furthermore, terms "comprises," "comprising," or any other variation thereof, are intended to cover a non-exclusive inclusion, such that module, circuit, device components, structures and method steps that comprises a list of elements or steps does not include only those elements or steps but may include other elements or steps not expressly listed or inherent to such module, circuit, device components or steps. An element or step proceeded by "comprises ... a" does not, without more constraints, preclude the existence of additional identical elements or steps that comprises the element or step.

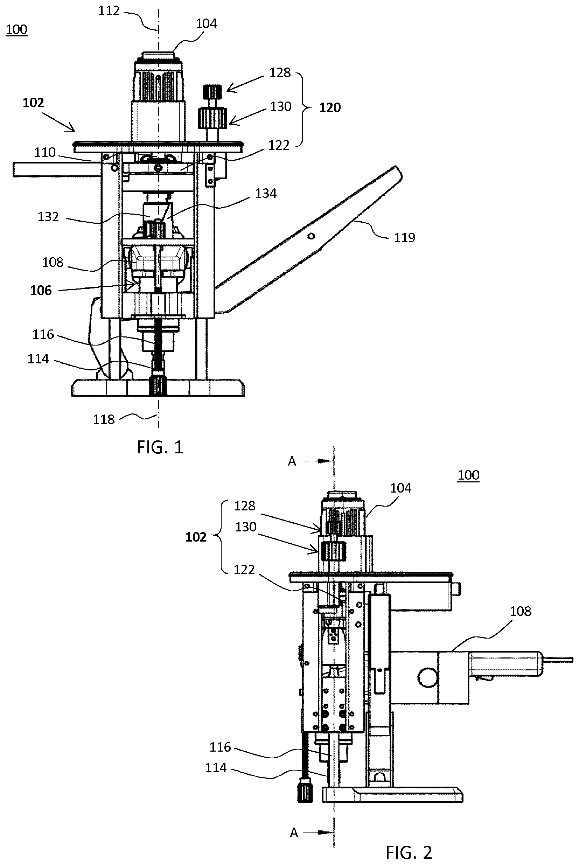

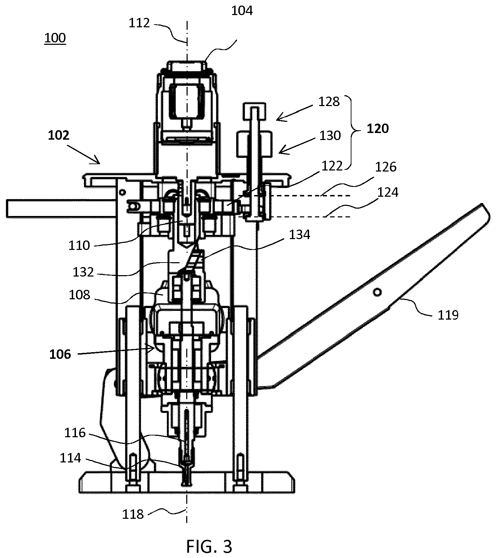

Referring now to FIGS. 1 and 2, schematic front and side views of a drilling device 100 for forming a hole with an undercut in accordance with an embodiment of the present invention are shown. In FIG. 1, the drilling device 100 is in a first operating mode to form a cylindrical part of the hole. FIG. 3 shows a schematic cross-sectional view of the drilling device 100 from line A-A of FIG. 2 in accordance with an embodiment of present invention.

The drilling device 100 comprises a supporting stand 102 that holds a first drive device 104, and a holder 106 that holds a second drive device 108. The first drive device 104 rotates a first shaft 110 about a first axis 112. In a preferred embodiment, the first axis 112 is a principal axis of the drilling device 100. In a preferred embodiment, the first drive device 104 comprises a motor device. The second drive device 108 rotates a drill bit 114 through a second shaft 116 coupled therebetween about a second axis 118. In a preferred embodiment, the second drive device 108 is an angle grinder device. In a preferred embodiment, the holder 106 is displaceable mounted to the supporting stand 102, wherein the holder 106 can move in a vertical direction with respect to the supporting stand 102, and move in a horizontal direction with respect to or wobble about the principal axis of the drilling device 100. In a preferred embodiment, the drilling device 100 also comprises a main lever 119 coupled to the holder 106, wherein the main lever 119 moves the second drive device 108 downwardly to form the cylindrical part of the hole.

The drilling device 100 further comprises a radial offset mechanism 120 coupled between the supporting stand 102 and the holder 106. The radial offset mechanism 120 comprises a controller 122 movable between first and second positions 124 and 126 to switch an outward displacement distance of the second axis 118 with respect to the first axis 112 between first and second distances. In a preferred embodiment, the controller 122 is pivotable mounted to the support stand 102.

The radial offset mechanism 120 also comprises first and second adjusting elements 128 and 130 that respectively define the first and second positions 124 and 126. In a preferred embodiment, when the drilling device 100 is in the first operating mode, the controller 122 is biased to the first position 124 by a biasing element (not shown) coupled between the supporting stand 102 and the controller 122, wherein the first adjusting element 128 stops the controller 122 from moving beyond the first position 124 in a first direction away from the second position 126, wherein the first position 124 defines a diameter of the cylindrical part of the hole. In a preferred embodiment, the first distance is the outward displacement distance of the second axis 118 with respect to the first axis 112, when the drilling device 100 is in the first operating mode, that is, when the controller 122 is biased to and stopped at the first position 124.

In a preferred embodiment, the radial offset mechanism 120 further comprises a first offset block 132 rigidly mounted to the controller 122, and a second offset block 134 rigidly mounted to the holder 106. In a preferred embodiment, the first and second offset blocks 132 and 134 engage at and are relatively slidable along an inclined surface, wherein a relative position between the first and second offset blocks 132 and 134 defines the outward displacement distance of the second axis 118 with respect to the first axis 112. In a preferred embodiment, the outward displacement distance can be either a distance between the first and second axes 112 and 118 if a relative movement between the first and second offset blocks 132 and 134 results in a parallel offset of the second axis 118 away from the first axis 112, or an angle between the first and second axes 112 and 118 if the relative movement between the first and second offset blocks 132 and 134 tilts the second axis 118 with respect to the first axis 112. In a preferred embodiment, the first distance is equal to or larger than zero. When the first distance is zero, the first and second axes 112 and 118 coincide. When the first distance is larger than zero, the first and second axes 112 and 118 are either in parallel with or at an angle to each other, wherein the angle is larger than 0° .

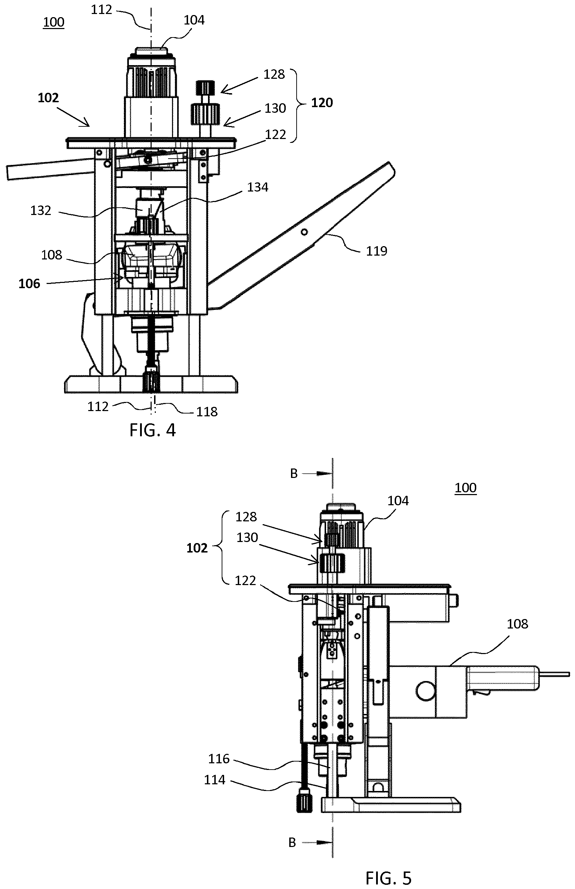

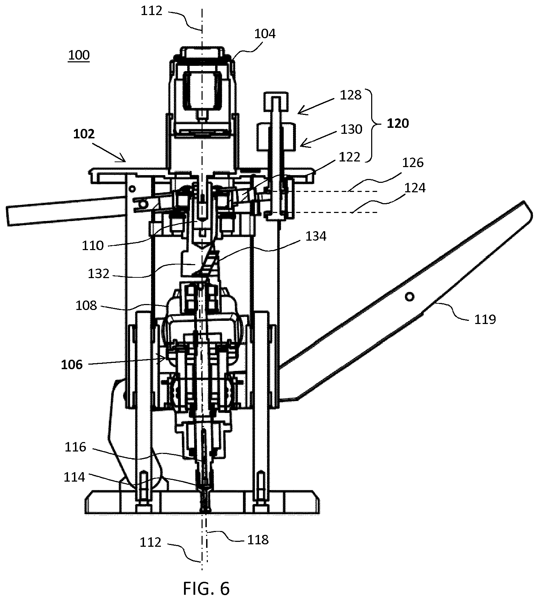

FIGS. 4 and 5 show schematic front and side views of the drilling device 100 in a second operating mode when forming the undercut of the hole in accordance with an embodiment of the present invention. FIG. 6 shows a schematic cross-sectional view of the drilling device 100 from line B-B of FIG. 5 in accordance with an embodiment of present invention.

In a preferred embodiment, the controller 122 comprises a lever having a middle portion pivotable mounted to the supporting stand 102 and a first end moving between the first and second positions 124 and 126. As shown in FIG. 6, by pressing down a second end opposite to the first end of the controller 122, the first end of the controller 122 is moved to the second position 126 and forces the first offset block 132 to push away the second offset block 134, which results in the relative movement between the first and second offset blocks 132 and 134. Such relative movement enlarges the outward displacement distance of the second axis 118 with respect to the first axis 112 from the first distance to the second distance. In a preferred embodiment, the second adjusting element 130 stops the first end of the controller 122 from moving beyond the second position 126 in a second direction away from the first position 124, wherein the second position 126 defines a diameter of the undercut of the hole.

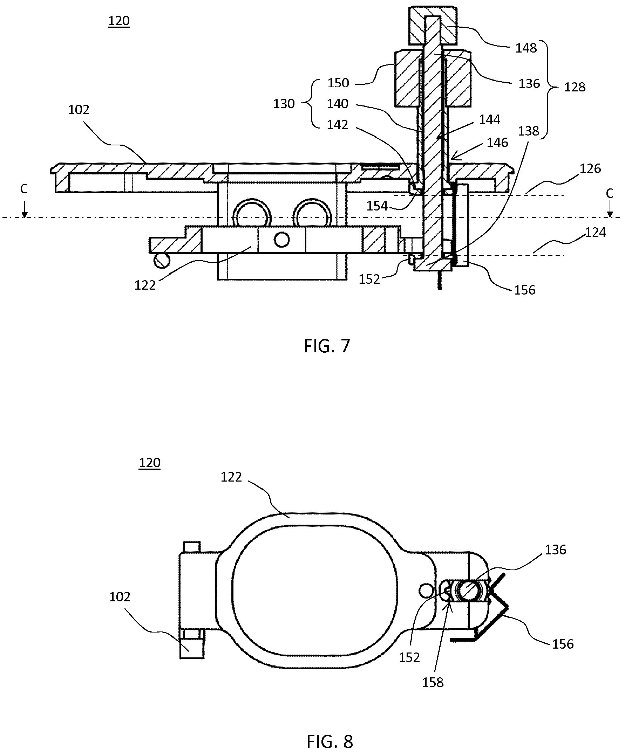

FIG. 7 is an enlarged schematic cross-sectional view of the controller 122, the first and second adjusting elements 128 and 130, and part of the supporting stand 102 in FIG. 1 in accordance with an embodiment of present invention.

In a preferred embodiment, the first adjusting element 128 comprises a first rod 136 and a first stop 138 that radially projects from the first rod 136 and is moveable with respect to the supporting stand 102, wherein the first stop 138 defines the first position 124 and stops the controller 122 from moving beyond the first position 124 in the first direction away from the second position 126. In a preferred embodiment, the first stop 138 is integrally formed from the first rod 136.

Similarly, in a preferred embodiment, the second adjusting element 130 comprises a second rod 140 and a second stop 142 that radially projects from the second rod 140, wherein the second stop 142 defines the second position 126 and stops the controller 122 from moving beyond the second position 126 in the second direction away from the first position 124. In a preferred embodiment, the second stop 142 is integrally formed from the second rod 140.

In a preferred embodiment, the second rod 140 comprises a longitudinal through hole 144 that allows the first rod 136 to pass therethrough. In a preferred embodiment, the first rod 136 comprises first male threads, and the longitudinal through hole 144 comprises female threads that mate with the first male threads of the first rod 136. In a preferred embodiment, the second rod 140 comprises second male threads mating with a threaded hole 146 of the supporting stand 102.

In a preferred embodiment, the first adjusting element 128 further comprises a first head 148 secured to the first rod 136 for adjusting a position of the first stop 138 to define the first position 124, wherein the position of the first stop 138 is adjusted by rotating the first head 148. Similarly, the second adjusting element 130 comprises a second head 150 secured to the second rod 140 for adjusting a position of the second stop 142 to define the second position 126, wherein the position of the second stop 142 is adjusted by rotating the second head 150.

In a preferred embodiment, the first head 148 is positioned above the second head 150, and/or a size of the first head 148 is less than a size of the second head 150, such that a user can easily recognize the correct head between the first and second heads 148 and 150 to adjust the diameter of the cylindrical part or the undercut of hole.

FIG. 8 is a top plan view of the controller and a cross-sectional the second adjusting element from line C-C of FIG. 7 in accordance with an embodiment of present invention. In a preferred embodiment, the first and second stops 138 and 142 comprise first and second ratchet wheels 152 and 154 respectively mounted to the first and second rods 136 and 140. In a preferred embodiment, the radial offset mechanism 120 further comprises a spring element 156 mounted to the supporting stand 102 and biased against the first and second ratchet wheels 152 and 154, wherein the spring element 156 holds the first and second stops 138 and 142 respectively in the first and second positions 124 and 126 by having first and second contacting points thereof respectively engaged in notches of the first and second ratchet wheels 152 and 154. In a preferred embodiment, the spring element 156 is a spring sheet partially bent to a V-shape in section, wherein a peak portion of the V-shape is engaged in the notches of the first and second ratchet wheels 152 and 154.

In a preferred embodiment, the controller 122 comprises an opening 158 that allows the first rod 136 to pass therethrough.

The description of the preferred embodiments of the present invention has been presented for purposes of illustration and description, but is not intended to be exhaustive or to limit the invention to the forms disclosed. It will be appreciated by those skilled in the art that changes could be made to the embodiments described above. It is understood, therefore, that this invention is not limited to the particular embodiment disclosed, but covers modifications within the scope of the present invention as defined by the appended claims.

## Claims

1. A drilling device (100), comprises:
a supporting stand (102) for holding a first drive device (104) that rotates a first shaft (110) about a first axis (112) ;
a holder (106) for holding a second drive device (108) that rotates a second shaft (116) about a second axis (118) ; and
an offset mechanism (120) coupled between the supporting stand (102) and the holder (106), wherein the offset mechanism (120) comprises:
a controller (122) movable between first and second positions (124, 126) to switch an outward displacement distance of the second axis (118) with respect to the first axis (112) between first and second distances;
**characterised in that** the offset mechanism (120) further comprises:
a first adjusting element (128) moveable with respect to the supporting stand (102), wherein the first adjusting element (128) defines the first position (124) and stops the controller (122) from moving beyond the first position (124) in a first direction away from the second position (126); and
a second adjusting element (130) moveable with respect to the supporting stand (102), wherein the second adjusting element (130) defines the second position (126) and stops the controller (122) from moving beyond the second position (126) in a second direction away from the first position (124), wherein the second adjusting element (130) comprises a longitudinal through hole (144) that allows the first adjusting element (128) to pass therethrough.

2. The drilling device of claim 1, wherein the first adjusting element comprises a first rod (136) and a first stop (138) that radially projects from the first rod and is moveable with respect to the supporting stand, wherein the first stop defines the first position and stops the controller from moving beyond the first position in the first direction.

3. The drilling device of claim 2, wherein the controller comprises an opening (158) that allows the first rod to pass therethrough.

4. The drilling device of claim 2, wherein the second adjusting element comprises a second rod (140) and a second stop (142) that radially projects from the second rod and is moveable with respect to the supporting stand, wherein the second stop defines the second position and stops the controller from moving beyond the second position in a second direction away from the first position, wherein the second rod comprises the longitudinal through hole that allows the first rod to pass therethrough.

5. The drilling device of claim 4, wherein the first rod comprises first male threads, and the longitudinal through hole comprises female threads that mate with the first male threads of the first rod, and wherein the second rod comprises second male threads mating with a threaded hole (146) of the supporting stand.

6. The drilling device of claim 4, wherein the first adjusting element comprises a first head (148) secured to the first rod for
adjusting the first stop to define the first position, and the second adjusting element comprises a second head (150) secured to the
second rod for adjusting the second stop to define the second position.

7. The drilling device of claim 6, wherein the first head adjusts the first stop by rotating the first rod, and the second head adjusts the second stop by rotating the second rod.

8. The drilling device of claim 6, wherein the first distance is less than the second distance, wherein the first head is positioned above the second head, and/or a size of the first head is less than a size of the second head.

9. The drilling device of claim 7, wherein the first and second stops comprise first and second ratchet wheels (152, 154) respectively
mounted to the first and second rods, wherein the drilling device further comprises a spring element (156) mounted to the supporting
stand and biased against the first and second ratchet wheels, wherein the spring element holds the first and second stops respectively in the first and second positions by having first and second contacting points thereof respectively engage in notches of the first and second ratchet wheels.

10. The drilling device of claim 9, wherein the spring element is a spring sheet partially bent to a V-shape in section, wherein a peak portion of the V-shape engages in the notches of the first and second ratchet wheels.

## Patentansprüche

1. Bohrvorrichtung (100), Folgendes umfassend:
ein Stützgestell (102) zum Halten einer ersten Antriebsvorrichtung (104), die eine erste Welle (110) um eine erste Achse (112) dreht;
eine Halterung (106) zum Halten einer zweiten Antriebsvorrichtung (108), die eine zweite Welle (116) um eine zweite Achse (118) dreht;
und
einen Versatzmechanismus (120), der zwischen das Stützgestell (102) und die Halterung (106) gekoppelt ist,
wobei der Versatzmechanismus (120) Folgendes umfasst:
eine Steuerung (122), die zwischen einer ersten und zweiten Stellung (124, 126) beweglich ist, um die Auswärtsversatzentfernung der zweiten Achse (118) in Bezug zur ersten Achse (112) zwischen einer ersten und zweiten Entfernung zu wechseln;
**dadurch gekennzeichnet, dass** der Versatzmechanismus (120) ferner Folgendes umfasst:
ein erstes Einstellelement (128), das in Bezug zum Stützgestell (102) beweglich ist, wobei das erste Einstellelement (128) die erste Stellung (124) definiert und die Steuerung (122) daran hindert, sich in eine erste Richtung über die erste Stellung (124) hinaus von der zweiten Stellung (126) wegzubewegen;
und ein zweites Einstellelement (130), das in Bezug zum Stützgestell (102) beweglich ist, wobei das zweite Einstellelement (130) die zweite Stellung (126) definiert und die Steuerung (122) daran hindert, sich in eine zweite Richtung über die zweite Stellung (126) hinaus von der ersten Stellung (124) wegzubewegen, wobei das zweite Einstellelement (130) eine in Längsrichtung verlaufende Durchgangsbohrung (144) umfasst, die zulässt, dass das erste Einstellelement (128) dort hindurch verläuft.

2. Bohrvorrichtung nach Anspruch 1, wobei das erste Einstellelement eine erste Stange (136) und einen ersten Anschlag (138), der von der ersten Stange radial vorsteht und in Bezug zum Stützgestell beweglich ist, umfasst, wobei der erste Anschlag die erste Stellung definiert und die Steuerung daran hindert, sich in die erste Richtung über die erste Stellung hinaus zu bewegen.

3. Bohrvorrichtung nach Anspruch 2, wobei die Steuerung eine Öffnung (158) umfasst, die zulässt, dass die erste Stange dort hindurch verläuft.

4. Bohrvorrichtung nach Anspruch 2, wobei das zweite Einstellelement eine zweite Stange (140) und einen zweiten Anschlag (142), der von der zweiten Stange radial vorsteht und in Bezug zum Stützgestell beweglich ist, umfasst, wobei der zweite Anschlag die zweite Stellung definiert und die Steuerung daran hindert, sich in die zweite Richtung von der ersten Stellung weg über die zweite Stellung hinaus zu bewegen, wobei die zweite Stange eine in Längsrichtung verlaufende Durchgangsbohrung umfasst, die zulässt, dass die erste Stange dort hindurch verläuft.

5. Bohrvorrichtung nach Anspruch 4, wobei die erste Stange ein erstes Außengewinde umfasst und die in Längsrichtung verlaufende Durchgangsbohrung ein Innengewinde umfasst, das sich mit dem ersten Außengewinde der ersten Stange verbindet, und wobei die zweite Stange ein zweites Außengewinde umfasst, das sich mit einer Gewindebohrung (146) des Stützgestells verbindet.

6. Bohrvorrichtung nach Anspruch 4, wobei das erste Einstellelement einen ersten Kopf (148) umfasst, der an der ersten Stange befestigt ist, um den ersten Anschlag einzustellen, um die erste Stellung zu definieren, und wobei das zweite Einstellelement einen zweiten Kopf (150) umfasst, der an der zweiten Stange befestigt ist, um den zweiten Anschlag einzustellen, um die zweite Stellung zu definieren.

7. Bohrvorrichtung nach Anspruch 6, wobei der erste Kopf durch Drehen der ersten Stange den ersten Anschlag einstellt und der zweite Kopf durch Drehen der zweiten Stange den zweiten Anschlag einstellt.

8. Bohrvorrichtung nach Anspruch 6, wobei die erste Entfernung kleiner als die zweite Entfernung ist, wobei der erste Kopf über dem zweiten Kopf angeordnet ist, und/oder wobei der erste Kopf kleiner als der zweite Kopf ist.

9. Bohrvorrichtung nach Anspruch 7, wobei der erste und zweite Anschlag ein erstes und zweites Zahnrad (152, 154) umfassen, die an der ersten bzw. zweiten Stange montiert sind, wobei die Bohrvorrichtung ferner ein Federelement (156) umfasst, das am Stützgestell montiert und gegen das erste und zweite Zahnrad vorgespannt ist, wobei das Federelement den ersten und zweiten Anschlag in der ersten bzw. zweiten Stellung hält, indem dessen erster bzw. zweiter Kontaktpunkt in die Kerben des ersten bzw. zweiten Zahnrads eingreift.

10. Bohrvorrichtung nach Anspruch 9, wobei das Federelement ein Federblech ist, das teilweise in einen V-förmigen Querschnitt gekrümmt ist, wobei ein Spitzenabschnitt der V-Form in die Kerben des ersten und zweiten Zahnrads eingreift.

## Revendications

1. Dispositif de perçage (100), comprenant :
un socle de soutien (102) servant à supporter un premier dispositif d'entraînement (104) qui met un premier arbre (110) en rotation autour d'un premier axe (112) ;
un support (106) servant à supporter un second dispositif d'entraînement (108) qui met un second arbre (116) en rotation autour d'un second axe (118) ; et
un mécanisme de décalage (120) accouplé entre le socle de soutien (102) et le support (106), le mécanisme de décalage (120) comprenant :
un dispositif de commande (122) déplaçable entre des première et seconde positions (124, 126) afin de faire passer l'écart vers l'extérieur du second axe (118) vis-à-vis du premier axe (112) à une première ou une seconde distance ;
**caractérisé en ce que** le mécanisme de décalage (120) comprend en outre :
un premier élément de réglage (128) déplaçable vis-à-vis du socle de soutien (102), le premier élément de réglage (128) définissant la première position (124) et arrêtant le dispositif de commande (122) de sorte qu'il ne se déplace pas au-delà de la première position (124) dans une première direction s'éloignant de la seconde position (126) ; et
un second élément de réglage (130) déplaçable vis-à-vis du socle de soutien (102), le second élément de réglage (130) définissant la seconde position (126) et arrêtant le dispositif de commande (122) de sorte qu'il ne se déplace pas au-delà de la seconde position (126) dans une seconde direction s'éloignant de la première position (124), le second élément de réglage (130) comprenant un trou débouchant longitudinal (144) qui permet au premier élément de réglage (128) de le traverser.

2. Dispositif de perçage selon la revendication 1, dans lequel le premier élément de réglage comprend une première tige (136) et une première butée (138) qui fait saillie radialement à partir de la première tige et est déplaçable vis-à-vis du socle de soutien, la première butée définissant la première position et arrêtant le dispositif de commande de sorte qu'il ne se déplace pas au-delà de la première position dans la première direction.

3. Dispositif de perçage selon la revendication 2, dans lequel le dispositif de commande comprend une ouverture (158) qui permet à la première tige de le traverser.

4. Dispositif de perçage selon la revendication 2, dans lequel le second élément de réglage comprend une seconde tige (140) et une seconde butée (142) qui fait saillie radialement à partir de la seconde tige et est déplaçable vis-à-vis du socle de soutien, la seconde butée définissant la seconde position et arrêtant le dispositif de commande de sorte qu'il ne se déplace pas au-delà de la seconde position dans la seconde direction s'éloignant de la première position, la seconde tige comprenant un trou débouchant longitudinal qui permet à la première tige de la traverser.

5. Dispositif de perçage selon la revendication 4, dans lequel la première tige comprend des premiers filets mâles, et le trou débouchant longitudinal comprend des filets femelles qui s'accouplent avec les premiers filets mâles de la première tige, et dans lequel la seconde tige comprend des seconds filets mâles s'accouplant avec un trou taraudé (146) du socle de soutien.

6. Dispositif de perçage selon la revendication 4, dans lequel le premier élément de réglage comprend une première tête (148) fixée à la première tige pour le réglage de la première butée afin de définir la première position, et le second élément de réglage comprend une seconde tête (150) fixée à la seconde tige pour le réglage de la seconde butée afin de définir la seconde position.

7. Dispositif de perçage selon la revendication 6, dans lequel la première tête règle la première butée en mettant la première tige en rotation, et la seconde tête règle la seconde butée en mettant la seconde tige en rotation.

8. Dispositif de perçage selon la revendication 6, dans lequel la première distance est inférieure à la seconde distance, la première tête étant placée au-dessus de la seconde tête, et/ou une taille de la première tête est inférieure à une taille de la seconde tête.

9. Dispositif de perçage selon la revendication 7, dans lequel les première et seconde butées comprennent des première et seconde roues à rochet (152, 154) installées respectivement sur les première et seconde tiges, le dispositif de perçage comprenant en outre un élément formant ressort (156) installé sur le socle de soutien et sollicité en opposition aux première et seconde roues à rochet, dans lequel l'élément formant ressort maintient les première et seconde butées respectivement dans les première et seconde positions en faisant en sorte que des premier et second points de contact de celles-ci viennent respectivement en prise dans des crans des première et seconde roues à rochet.

10. Dispositif de perçage selon la revendication 9, dans lequel l'élément formant ressort est un ressort en feuillard partiellement plié de façon à présenter une section en forme de V, dans lequel une partie sommet de la forme en V vient en prise dans les crans des première et seconde roues à rochet.
